# EUROPÄISCHE PATENTSCHRIFT

(11) **EP 4 098 355 B1**
(45) Veröffentlichungstag und Bekanntmachung des Hinweises auf die Patenterteilung: **20.08.2025**
(21) Anmeldenummer: 22166748.8
(22) Anmeldetag: 05.04.2022
(51) Int. Cl.: B01J 3/04, B01J 3/02

(54) **AUTOKLAV MIT FÖRDEREINRICHTUNG ZUR BESCHICKUNG DESSELBEN**
AUTOCLAVE WITH CONVEYOR FOR CHARGING SAME
AUTOCLAVE POURVU DE DISPOSITIF DE TRANSPORT DESTINÉ AU CHARGEMENT DE CELUI-CI

(30) Priorität: 03.06.2021 DE 102021114403
(43) Veröffentlichungstag der Anmeldung: 07.12.2022
(73) Patentinhaber: MASCHINENBAU SCHOLZ GMBH & CO. KG, 48653 Coesfeld (DE)
(72) Erfinder: Funke, Frank, 48653 Coesfeld (DE); Herrmann, Martin, 48653 Coesfeld (DE)
(74) Vertreter: Hauck Patent- und Rechtsanwälte PartmbB

(56) Entgegenhaltungen:
- EP-A1- 2 377 560
- WO-A1-2008/093367
- US-A1- 2006 130 667
- US-A1- 2018 070 615

## Beschreibung

Die Erfindung betrifft einen Autoklav für die Druck- und/oder Temperaturbehandlung von Produkten, insbesondere zur Konservierung von Lebensmitteln. Der Autoklav umfasst einen einen Druckraum zur Aufnahme der Produkte begrenzenden Druckbehälter. Bevorzugt umfasst der Autoklav zudem eine Drehvorrichtung zur Rotation der in den Druckraum eingebrachten Produkte während der Behandlung mit mindestens einem die Produkte aufnehmenden, innerhalb des Druckraums angeordneten Drehgestell, einem außerhalb des Druckraums angeordneten Drehantrieb sowie einer zwischen dem Drehgestell und dem Drehantrieb durch eine Druck- und/oder temperatursichere Öffnung des Druckbehälters verlaufenden Antriebswelle.

Derartige Autoklaven dienen insbesondere zum Konservieren von Produkten, wie beispielsweise Lebensmitteln. Die Lebensmittel sind dabei üblicherweise in Verpackungen, wie Gläsern, Dosen oder ähnlichem verpackt. Zur Behandlung im Autoklav werden die Produkte üblicherweise in sogenannten Produktkäfigen angeordnet, die in den Autoklav hineinverfahren und nach Abschluss der Konservierungsbehandlung wieder aus diesem herausbewegt werden. Innerhalb der Produktkäfige sind die Produkte mithilfe von perforierten Zwischenlagen aufeinandergestapelt, wobei Produktkäfige und Zwischenlagen wasserdurchlässig bzw. dampfdurchlässig ausgebildet sind, um eine gleichmäßige Wasser-/Dampfbehandlung aller Produkte in dem Autoklav zu gewährleisten.

Der Druckbehälter des Autoklavs weist zumeist eine zylindrische Form auf und ist in der Regel liegend angeordnet. Zur Beschickung eines solchen Autoklavs wird ein Produktkäfig nach dem anderen bei geöffnetem, druckdichten Verschlussdeckel des Autoklavs entlang der Längsachse des zylinderförmigen Druckbehälters in den Druckbehälter hineinbewegt. Es können dafür parallel zur Längsachse des Druckbehälters verlaufende Rollenbahnen o.ä. vorgesehen sein, auf welche die Produktkäfige aufgesetzt und entlang derer sie von dem Einlass des Autoklaven tiefer in den Autoklaven hineingerollt werden können. Ein solches Beschicken erfolgt bislang zumeist händisch, wobei die Produktkäfige einzeln auf Fahrgestellen vor die Autoklave geschoben werden, das Fahrgestell am Fußboden verriegelt und anschließend der Produktkäfig mit langen Stangen auf die Rollenbahnen des Autoklaven aufgeschoben wird. So werden nach und nach Produktkäfige in den Autoklaven eingeschoben, wobei zuvor eingebrachte Produktkäfige durch große Kraftanstrengung weiter in den Autoklaven hineingeschoben werden. Nach der erfolgten Wärme- bzw. Druckbehandlung im Autoklaven müssen die Produktkäfige entsprechend wieder manuell entnommen werden.

Das bisherige Beschicken des Autoklaven ist somit schon bereits aus ergonomischen Gründen nachteilig. So müssen beim Einschieben der Produktkäfige bis in den hinteren Teil des Autoklaven große Massen - ein einzelner Produktkäfig kann beispielsweise 300 kg oder auch 400 kg wiegen - in gebückter Haltung mit Muskelkraft bewegt werden. Trotz der passiven Rollenbahnen, die das Einschieben zwar erleichtern, kommt es somit zu einem hohen Arbeits- und Zeitaufwand. Bei einem beispielsweise vier Produktkäfige aufnehmenden Autoklaven und einer angenommenen Prozesszeit von einer Stunde werden pro Arbeitsschicht und Autoklav 32 Produktkäfige ein- und ausgefahren. Von jedem Arbeiter werden üblicherweise mindestens vier Autoklaven be- und entladen. Hieraus ergeben sich pro Schicht und Arbeiter 128 in den Autoklaven ein- bzw. aus diesem herauszubringende Produktkäfige.

Eine besondere Schwierigkeit ergibt sich im Übrigen durch das Drehen der Produkte innerhalb eines eine Drehvorrichtung umfassenden Autoklaven während der Behandlung. So werden die Produktkäfige innerhalb des Drehgestells aufgenommen und während der Druck- bzw. Temperaturbehandlung im Autoklaven üblicherweise um die Längsachse des Druckbehälters relativ zu dem Druckbehälter gedreht bzw. verschwenkt. Eine solche Drehung ermöglicht eine bessere Wärmeverteilung durch Vermischung innerhalb des Produktes und dadurch einen besseren Wärmeübergang zu den Produkten. Die Produktkäfige sind hierfür während des Prozesses im Drehgestell fixiert. Der Antrieb erfolgt über den außerhalb des Druckbehälters angeordneten Drehantrieb, der mit dem Drehgestell über eine gegenüber dem Druckbehälter abgedichtete Welle verbunden ist. Insbesondere bei derartigen Autoklaven mit Drehvorrichtung ist die Integration einer Fördereinrichtung zur Beschickung des Autoklaven eine große Herausforderung.

US 2018/0070615 A1 beschreibt eine Vorrichtung zum Gebrauch in Verbindung mit Autoklaven zur Sterilisation und im Besonderen ein System und ein Verfahren zum automatischen Beladen und Entladen von Autoklaven. Das System weist starre Ketteneinheiten auf, die zu einer Zugangsöffnung des Autoklaven so ausgerichtet sind, dass eine starre Kette entlang eines Kettenförderungspfades durch die Zugangsöffnung in den Autoklav gefördert werden kann.

US 2006/0130667 A1 beschreibt eine Klemmvorrichtung zur Verwendung in einem Autoklaven und ein System zur sicheren Befestigung eines Korbes oder einer Reihe von Körben, die ein Produkt enthalten, innerhalb eines Autoklaven. Die bevorzugte Ausführungsform wird mit Rotations-Autoklaven verwendet, die einen Rotationseinsatz zur Aufnahme von produktbeladenen Körben umfassen. Zur sicheren Positionierung und Stützung der Körbe innerhalb des Autoklaven wird ein Balgsystem verwendet, wobei die Körbe während des Autoklaviervorgangs an den Rotationseinsatz geklemmt werden.

WO 2008/093367 A1 betrifft ein System zum Pasteurisieren von Lebensmitteln, mit dem eine bessere Leistung als mit bestehenden Systemen erzielt werden können soll.

EP 2 377 560 A1 bezieht sich auf rotierende diskontinuierliche Autoklaven des horizontalen End-Over-End-Typs mit Gegendruck-Sterilisationstechnologie. Dabei sollen Auswirkungen des Überdrucks neutralisiert werden, der sich notwendigerweise im Inneren der Behälter während der Sterilisation mit Strömungen in die gleiche Richtung aufbaut. Der Autoklav sieht sowohl die Verwendung von stationären Düsen, die sich im oberen Bereich der Sterilisationskammer befinden, als auch von beweglichen Düsen vor, die sich mit Körben drehen. Die Körbe werden mit Containern bestückt, die das Produkt enthalten.

Der Erfindung liegt die Aufgabe zugrunde, einen Autoklaven, insbesondere einen Autoklaven mit Drehvorrichtung, bereitzustellen, der in ergonomisch günstiger und in effizienter Weise mit Produkten beschickt werden kann.

Die Erfindung löst die Aufgabe durch einen Autoklaven gemäß Anspruch 1. Vorteilhafte Ausgestaltungen sind Gegenstand der abhängigen Ansprüche, der Beschreibung sowie der Figuren.

Erfindungsgemäß umfasst der Autoklav der eingangs genannten Art eine Fördereinrichtung zur Beschickung des Autoklaven, wobei diese Fördereinrichtung folgendes umfasst: Innerhalb des Druckraums angeordnete Fördermittel zum Transportieren der Produkte von einem Einlass des Autoklaven tiefer in den Autoklaven hinein, sowie einen innerhalb des Druckraums angeordneten Förderantrieb zum Antreiben der Fördermittel. Wie später noch erläutert wird, ist der Förderantrieb bevorzugt ein fluidtechnischer, der über Fluidleitungen versorgt wird. Zudem weist der Autoklav erfindungsgemäß die eingangs erwähnte Drehvorrichtung auf, wobei die Fördermittel und der Förderantrieb gemeinsam mit dem Drehgestell drehbar sein können und wobei sich die Fluidleitungen durch die

Antriebswelle hindurch nach außerhalb des Druckbehälters erstrecken können und dort über eine fluidtechnische Drehdurchführung mit einer fluidtechnischen Versorgungseinheit verbunden sein können.

Der erfindungsgemäße Autoklav dient insbesondere zur Temperaturbehandlung von Produkten, entweder bei erhöhtem Druck oder drucklos. Zu solchen Produkten zählen insbesondere Lebensmittel, die in dem Autoklav sterilisiert bzw. konserviert werden. Auch können jedoch Baustoffe, wie beispielsweise Kalksandstein, in dem Autoklaven behandelt, insbesondere ausgehärtet werden. Als weiteres Beispiel können als Produkte Faserverbundbauteile aus faserverstärkten Kunststoffen behandelt werden. Auch kann eine Vulkanisation von Gummiteilen als Produkten erfolgen. Die Produkte, insbesondere Lebensmittel, werden insbesondere in Produktkäfigen in den Druckraum des Autoklaven eingebracht. So können insbesondere Lebensmittel in wie eingangs erwähnten Produktkäfigen in das erfindungsgemäß vorgesehene Drehgestell des Autoklaven eingebracht werden. Die Produktkäfige werden an dem Drehgestell fixiert. So kann im Drehgestell eine Klemmvorrichtung zum Fixieren der Produktkäfige vorgesehen sein. Während des Behandlungsprozesses kann dann in allgemein bekannter Weise über den Drehantrieb eine Drehung der Antriebswelle und damit des Drehgestells mitsamt der darin aufgenommenen Produkte erfolgen. Eine Drehung meint dabei nicht zwingenderweise eine Drehung um 360°. Es kann vielmehr, zumindest bei einigen Prozessen, die Antriebswelle zu einer oder beiden Seiten um einen kleineren Winkelbereich gedreht werden. Die Produktkäfige können so zu einer oder beiden Seiten verschwenkt werden. Somit kann eine gleichmäßige Erwärmung der Produkte erreicht werden. Zur Erwärmung kann der Autoklav eine Heizquelle umfassen, insbesondere eine Heißgasquelle oder auch eine Mikrowellenquelle. In der Nahrungsmittelindustrie, also zur Erwärmung von Lebensmitteln, wird zumeist Dampf eingesetzt.

Dank der erfindungsgemäßen Fördereinrichtung kann der Autoklav in einfacher Weise, unterstützt durch einen Antrieb, beschickt und entladen werden. Es ist also nicht länger die manuelle Beschickung/Entladung notwendig. Hierzu können die Produktkäfige weiterhin von Hand an den Autoklaven herangefahren werden, wobei eine Übergabe der Produktkäfige an die Fördermittel innerhalb des Druckraums ebenfalls wie zuvor händisch erreicht werden kann. Der Förderantrieb fördert dann mittels der Fördermittel die Produktkäfige ohne den Einsatz von Muskelkraft tiefer in den Autoklaven hinein. Die Fördermittel können sich hierfür von dem Einlass des Autoklaven bis tief in den Autoklaven hineinerstrecken, insbesondere bis zu einem Ende des Autoklaven, derart, dass der Autoklav vollständig mithilfe der Fördermittel beschickt werden kann. Der Förderantrieb kann manuell gestartet werden oder auch automatisch starten bei Kontakt mit einem Produkt bzw. Produktkäfig.

Erfindungsgemäß ist der Förderantrieb - ebenso wie die Fördermittel - innerhalb des Druckraums angeordnet. Diese Anordnung ist besonders vorteilhaft, da der Antrieb direkt an den Fördermitteln angreifen kann. Der Förderantrieb ist dabei derart ausgelegt, dass er den Umgebungseinflüssen im Autoklaven während des Betriebs, also insbesondere den während des Betriebs auftretenden hohen Drücken und/oder Temperaturen, standhält. Der Förderantrieb kann somit während des Betriebs des Autoklaven, also während des Prozesses, innerhalb des Druckraums verbleiben. Es können Versorgungsleitungen zur Versorgung des Förderantriebs vorgesehen sein, die aus dem Druckraum hinausführen. Diese Versorgungsleitungen können insbesondere über eine druck- und/oder temperatursichere Durchführung aus dem Druckraum hinaus zur Umgebung des Druckbehälters führen. So ist eine Versorgung des Förderantriebs auch während des Betriebs des Autoklaven möglich.

Als Förderantrieb ist zwar grundsätzlich ein elektrischer Antrieb denkbar. Ein solcher elektrischer Antrieb jedoch nicht bevorzugt, da er nur mit großem Aufwand gegenüber den während des Betriebs des Autoklaven vorherrschenden Umgebungsbedingungen (Temperatur und Druck) widerstandsfähig ausgestaltet werden kann. Grundsätzlich besteht das Risiko, dass während des Betriebs des Autoklaven Prozesswasser in den elektrischen Antrieb eindringt.

Bevorzugt ist daher ein fluidtechnischer Förderantrieb vorgesehen, der über Fluidleitungen als Versorgungsleitungen versorgt wird. Ein solcher Antrieb kann den während des Betriebs des Autoklaven vorherrschenden Umgebungsbedingungen standhalten. Insbesondere kann hierfür ein Druck in dem Antrieb und den Fluidleitungen auch während des Betriebs des Autoklaven aufrechterhalten werden. Die Fluidleitungen können über eine druck- und/oder temperatursichere Durchführung aus dem Druckraum hinaus zur Umgebung des Druckbehälters führen. Fluidtechnisch meint hierbei, dass die Energie bzw. Kraft durch eine Strömung von Gasen oder Flüssigkeiten übertragen wird. Es kann sich bei dem Förderantrieb beispielsweise um einen pneumatischen Antrieb oder einen hydraulischen Antrieb handeln. Ein solcher Antrieb ist, insbesondere aufgrund fehlender elektrischer Bauteile, beständig gegen den im Autoklaven während des Prozesses vorherrschenden Umgebungsbedingungen, insbesondere Druck und Temperatur. Der Förderantrieb kann also ohne Beschädigung während des Prozesses innerhalb des Autoklaven verbleiben. Selbiges gilt für die Fördermittel, bei denen es sich beispielsweise um Förderketten handeln kann. Weiterhin sind sowohl die Fördermittel als auch der Förderantrieb erfindungsgemäß gemeinsam mit dem Drehgestell drehbar, sind insbesondere in dem Drehgestell aufgenommen. Auch die Fluidleitungen sind bevorzugt zumindest mit ihren innerhalb des Druckraums befindlichen Leitungsabschnitten entsprechend gemeinsam mit dem Drehgestell drehbar.

Eine besondere Schwierigkeit stellt die Versorgung des Förderantriebs mit Fluid von außerhalb des Autoklaven über die erwähnte Durchführung aus dem Druckraum hinaus zur Umgebung des Druckbehälters dar. Dies wurde für einen Autoklaven mit Drehantrieb gelöst, indem die Fluidleitungen sich durch die ohnehin vorhandene Antriebswelle des das Drehgestell drehenden Drehantriebs nach außen erstrecken. So erstrecken sich die Fluidleitungen zur Versorgung des fluidtechnischen Förderantriebs bevorzugt durch die Antriebswelle der bevorzugt vorgesehenen Drehvorrichtung hindurch nach außerhalb des Druckbehälters und sind dort über eine fluidtechnische Drehdurchführung mit einer fluidtechnischen Versorgungseinheit verbunden. Hierfür können beispielsweise Längsbohrungen durch die Antriebswelle verlaufen. Außerhalb des Druckbehälters ist dann eine fluidtechnische Drehdurchführung vorgesehen, mit der in an sich bekannter Weise der Übergang zur stationär angeordneten fluidtechnischen Versorgungseinheit gewährleistet wird.

Die beschriebene Fördereinrichtung ist besonders für das Rotationsverfahren geeignet, da kein mechanischer Kraftfluss mit einem stehenden Antrieb nötig ist. Der Autoklav weist erfindungsgemäß also eine Drehvorrichtung zur Rotation der in den Druckraum eingebrachten Produkte während der Behandlung auf, mit mindestens einem die Produkte aufnehmenden, innerhalb des Druckraums angeordneten Drehgestell, einem außerhalb des Druckraums angeordneten Drehantrieb sowie einer zwischen dem Drehgestell und dem Drehantrieb durch eine druck- und/oder temperatursichere Öffnung des Druckbehälters verlaufenden Antriebswelle, wobei die Fördermittel und der Förderantrieb gemeinsam mit dem Drehgestell drehbar sind. So kann mit der erläuterten fluidtechnischen Fördereinrichtung, bei der sich Fördermittel, Förderantrieb sowie die innerhalb des Druckraums bzw. der Antriebswelle befindlichen Fluidleitungen mit dem Drehgestell drehen und eine Fluidverbindung nach außen über die Antriebswelle der Drehvorrichtung erreicht wird, auch für Autoklaven mit Rotationsverfahren/Drehvorrichtung eine einfache Beschickung erreicht werden. Auch für Autoklaven ohne Drehvorrichtung ist der Förderantrieb jedoch sinnvoll, insbesondere da dann keine Wellenabdichtung nötig ist.

Es kann insbesondere auch während des Prozesses, also während der Behandlung der Produkte im Autoklaven unter hohem Druck bzw. hoher Temperatur, die Fluidversorgung des innerhalb des Druckraums angeordneten Förderantriebs der Fördereinrichtung aufrechterhalten werden. So kann innerhalb der Bauteile der Fördereinrichtung, insbesondere innerhalb des Förderantriebs, ein Überdruck gegenüber den im Druckraum auch während des Prozesses vorherrschenden Bedingungen aufrechterhalten werden. Damit wird verhindert, dass Verunreinigungen, insbesondere Prozesswasser, während des Prozesses in den Förderantrieb eindringen, was andernfalls zur Beeinträchtigung der Funktionsweise desselben führen könnte. In anderen Worten kann die gemeinsame Druckbeaufschlagung aller Versorgungsleitungen während des Prozesses ein Eindringen von Prozesswasser in das Versorgungssystem verhindern. Es erfolgt also bevorzugt keine Trennung der Energieversorgung von dem Förderantrieb während des Prozesses. Der Antrieb selbst ist jedoch bevorzugt während des Prozesses inaktiv, da ein Fördern der Produkte über die Fördermittel zu diesem Zeitpunkt auch nicht gewollt ist.

Zusammenfassend weist der Autoklav nach einer bevorzugten Ausgestaltung die folgenden Merkmale auf: Einen einen Druckraum zur Aufnahme der Produkte begrenzenden Druckbehälter, eine Drehvorrichtung zur Rotation der in den Druckraum eingebrachten Produkte während der Behandlung mit mindestens einem die Produkte aufnehmenden, innerhalb des Druckraums angeordneten Drehgestell, einem außerhalb des Druckraums angeordneten Drehantrieb sowie einer zwischen dem Drehgestell und dem Drehantrieb durch eine druck- und/oder temperatursichere Öffnung des Druckbehälters verlaufende Antriebswelle, eine Fördereinrichtung zur Beschickung des Autoklaven, mit innerhalb des Druckraums angeordneten Fördermitteln zum Transportieren der Produkte von einem Einlass des Autoklaven tiefer in den Autoklaven hinein, einem innerhalb des Druckraums angeordneten, fluidtechnischem Förderantrieb zum Antreiben der Fördermittel sowie den Förderantrieb versorgenden Fluidleitungen, wobei die Fördermittel und der Förderantrieb gemeinsam mit dem Drehgestell drehbar sind und wobei sich die Fluidleitungen durch die Antriebswelle hindurch nach außerhalb des Druckbehälters erstrecken und dort über eine fluidtechnische Drehdurchführung mit einer fluidtechnischen Versorgungseinheit verbunden sind.

Nach einer Ausgestaltung sind innerhalb des Druckraums Rollenbahnen angeordnet, entlang derer die Produkte, insbesondere die Produkte aufnehmende Produktkäfige, mittels der Fördermittel gefördert werden können. Auf derartigen Rollenbahnen können, wie eingangs bereits erwähnt, die Produkte, insbesondere die Produktkäfige in den Druckbehälter eingeschoben werden. Besonders vorteilhaft sind derartige Rollenbahnen in Kombination mit der erfindungsgemäßen Fördereinrichtung. So kann die Fördereinrichtung die Produkte bzw. Produktkäfige greifen und entlang der gegebenenfalls ohnehin vorhandenen Rollenbahnen in den Autoklaven befördern. Die Fördermittel können sich beispielsweise parallel zur Rollenbahn, insbesondere unterhalb der Produktkäfige, erstrecken. Die Fördermittel können beispielsweise kraftschlüssig, insbesondere mittels federgelagerten Fördermitteln, oder aber auch formschlüssig mit den Produkten bzw. Produktkäfigen zusammenwirken. Ein Formschluss kann gebildet werden über an den Fördermitteln vorgesehene Nocken, die an die Produkte bzw. Produktkäfige an- oder eingreifen. So können diese entlang der Rollenbahnen gezogen werden.

Nach einer Ausgestaltung sind als Fördermittel eines oder mehrere der folgenden vorgesehen: Förderketten, Förderriemen, Förderseile. Insbesondere Förderketten, beispielsweise aus Stahl, können sinnvoll sein, da diese besonders beständig gegenüber den während des Prozesses vorherrschenden Bedingungen sind. Die Fördereinrichtung kann somit ein Kettenförderer sein. Die Förderketten können insbesondere kraftschlüssig, bevorzugt mit einer einstellbaren Kraft, beispielsweise von unterhalb an die Produkte/Produktkäfige herangedrückt werden und diese somit zumindest geringfügig anheben. Die Fördereinrichtung kann grundsätzlich derart ausgebildet sein, dass eine Förderung ausschließlich über die Fördermittel erfolgt.

Allerdings kann auch, wie bereits angesprochen, in Kombination mit einer eventuell vorgesehenen Rollenbahn gefördert werden.

Nach einer Ausgestaltung sind die Fördermittel federnd gelagert. Insbesondere kann ein wie oben erläuterter Kettenförderer federnd gelagert sein. Durch eine solche Federung können die Fördermittel bei Aufnahme der Produkte bzw. Produktkäfige nachgeben, was die Gefahr einer Beschädigung oder Überbeanspruchung der Fördermittel verringert.

Nach einer Ausgestaltung sind die durch die Antriebswelle verlaufenden Leitungsabschnitte der Fluidleitungen als Längsbohrungen in der Antriebswelle ausgebildet. Entlang dieser Längsbohrungen können die Fluidleitungen verlegt sein. Auch können aber diese Bohrungen selbst die Fluidleitungen innerhalb der Antriebwelle bilden. Es müssen dann nicht separat Fluidleitungen in die Antriebswelle eingebracht werden, sondern lediglich Längsbohrungen, welche dann als Fluidleitungen dienen können. Dies ist besonders einfach.

Nach einer Ausgestaltung ist als Förderantrieb ein pneumatischer Förderantrieb vorgesehen, wobei die Fluidleitungen pneumatische Leitungen, die fluidtechnische Drehdurchführung eine pneumatische Drehdurchführung und die fluidtechnische Versorgungseinheit eine pneumatische Versorgungseinheit ist. Wie bereits erwähnt, kann jedoch grundsätzlich anstatt eines pneumatischen Förderantriebs auch ein hydraulischer Förderantrieb vorgesehen sein, wobei die weiteren Elemente der hydraulischen Fördereinrichtung dann entsprechend hydraulisch ausgebildet sind. Als Förderantrieb kann beispielsweise ein Druckluft-Getriebemotor vorgesehen sein. Eine solche pneumatische Fördereinrichtung ist für einen Autoklaven mit Rotationsvorrichtung besonders geeignet. So kann zum einen in einfacher und zuverlässiger Weise der Druck innerhalb des pneumatischen Systems aufrechterhalten werden, sodass während des Prozesses kein Wasser in die Fördereinrichtung eindringt. Bei einer eventuellen Beschädigung der pneumatischen Fördereinrichtung, beispielsweise durch Verschleiß, tritt zudem nur Druckluft in den Autoklaven ein, keine Hydraulikflüssigkeit.

Ausgestaltungen der Erfindung werden im Folgenden anhand von Figuren erläutert. Es zeigen:
- Fig. 1: einen erfindungsgemäßen Autoklaven in einer perspektivischen Ansicht, wobei der Druckbehälter zur Verdeutlichung der darin befindlichen Elemente durchsichtig dargestellt und der Verschlussdeckel fortgelassen ist,
- Fig. 2: den in Figur 1 mit C bezeichneten Detailausschnitt,
- Fig. 3: eine schematische Seitenansicht eines erfindungsgemäßen Autoklaven, und
- Fig. 4: einen Ausschnitt eines erfindungsgemäßen Autoklaven im Bereich der Antriebswelle.

Soweit nichts anderes angegeben ist, bezeichnen gleiche Bezugszeichen gleiche Gegenstände.

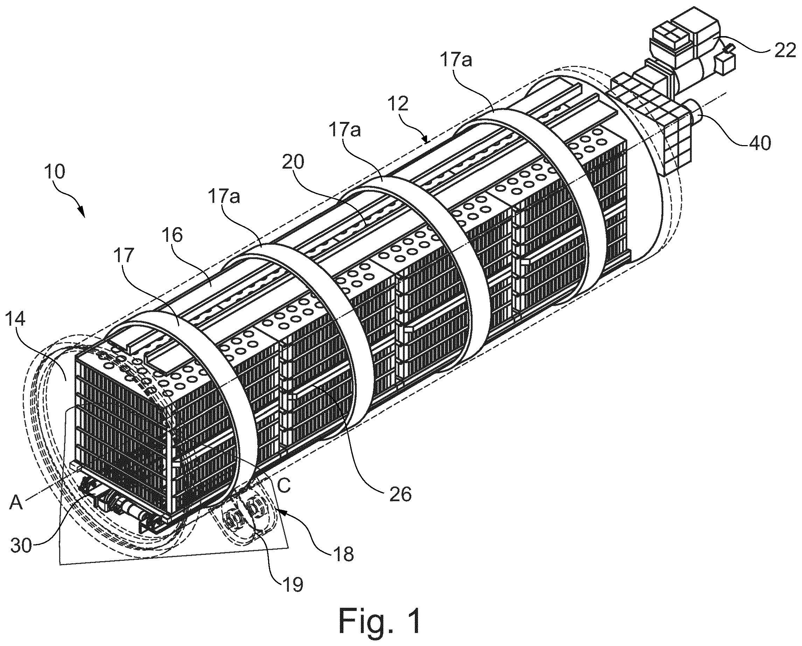

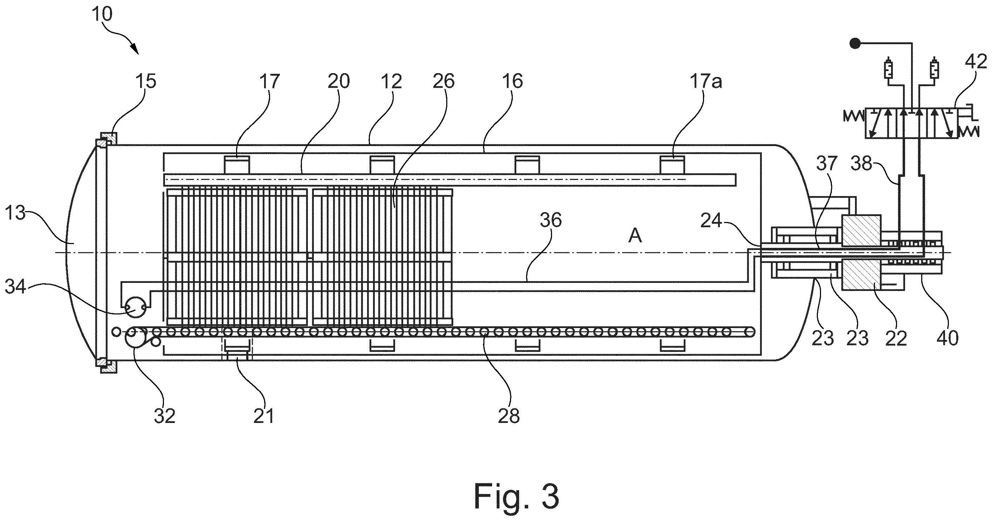

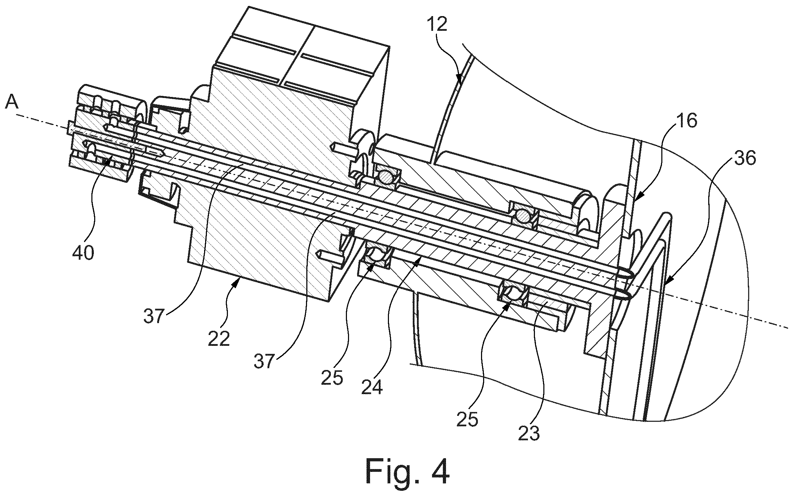

In Figur 1 ist ein erfindungsgemäßer Autoklav 10 dargestellt, der einen liegenden, zylindrischen Druckbehälter 12 umfasst. Der Druckbehälter 12 begrenzt einen Druckraum 14, in welchem vier Produktkäfige 26 aufgenommen sind. Der Autoklav 10 umfasst eine Drehvorrichtung zur Rotation der in den Druckraum 14 aufgenommenen Produktkäfige 26. Die Drehvorrichtung umfasst ein auch als Drehtrommel bezeichnetes Drehgestell 16 mit entlang eines Innenumfangs des Druckbehälters 12 verlaufenden Laufringen bzw. Stützringen 17, 17a und sich parallel zur Längsachse des Druckbehälters 12 erstreckenden Klemmleisten 20 zum Festklemmen der Produktkäfige 26 innerhalb des Drehgestells 16. Als Laufring 17 wird dabei der vorderste Ring bezeichnet, während die anderen 3 Ringe als Stützringe 17a zur Aufnahme der Klemmkräfte dienen. Weiterhin umfasst die Drehvorrichtung einen außerhalb des Druckraums 14 angeordneten Drehantrieb 22 und eine zwischen dem Drehgestell 16 und dem Drehantrieb 22 verlaufende Antriebswelle 24, die in den Figuren 3 und 4 zu erkennen ist.

Im Prozess, also während der Druck- bzw. Temperaturbehandlung von in den Produktkäfigen 26 aufgenommenen Produkten, werden das Drehgestell 16 und damit die Produktkäfige 26 um die Längsachse A des Druckbehälters 12 gedreht. Dies ermöglicht einen gleichmäßigen Temperatureintrag in die in den Produktkäfigen 26 aufgenommenen Produkte, bei denen es sich insbesondere um verpackte Lebensmittel handeln kann. Für eine solche Rotation des Drehgestells 16 greift der Drehantrieb 22 an der Antriebswelle 24 an und dreht diese um die Längsachse A des Druckbehälters 12. Der Laufring 17 läuft dabei auf Auflagerädern 19, die in Radkästen 18 in der Wandlung des Druckbehälters 12 aufgenommen sind. Über die Klemmleisten 20 sind die Produktkäfige 26 dabei sicher in dem Drehgestell 16 gehalten.

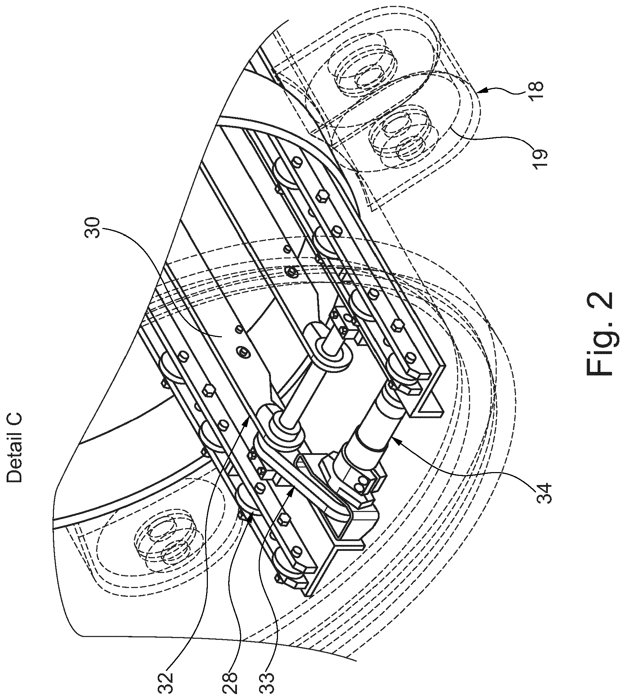

Der dargestellte Autoklav 10 umfasst eine erfindungsgemäße Fördereinrichtung 30 zur Beschickung des Autoklaven 10. Diese Fördereinrichtung 30 ist in Figur 2 im Detail zu erkennen. In dem vorliegenden Ausführungsbeispiel ist die Fördereinrichtung 30 als Kettenförderer ausgebildet, umfassend eine Förderkette 32 als Fördermittel, mit der die händisch an den Autoklaven herangefahrenen Produktkäfige von dem in Figur 2 ersichtlichen Einlass des Autoklaven 10 bis zu dem gegenüberliegenden Ende des Autoklaven gefördert werden können. Der Kettenförderer 30 zieht die Produktkäfige 26 dabei entlang von ebenfalls parallel zur Längsachse des Druckbehälters 12 verlaufenden, nicht angetriebenen Rollenbahnen 28. Innerhalb des Druckraums 14 ist zudem als Teil der Fördereinrichtung ein pneumatischer Förderantrieb 34 angeordnet, der über eine Antriebskette 33 die Förderkette 32 antreibt. Weitere Details sind in Figur 3 zu erkennen.

Figur 3 zeigt schematisch den Autoklaven 10 in einer Seitenansicht mit Blick durch den Druckbehälter 12 hindurch. In dieser Ansicht ist auch der Verschlussdeckel 13 des Autoklaven 10 dargestellt sowie ein Schnellverschluss 15 zum Sichern des Verschlussdeckels 13 in ihrer Schließstellung an dem Druckbehälter 12. In dieser Darstellung sind lediglich zwei Produktkäfige 26 gezeigt. Wie zuvor erläutert, kann eine Drehung des Drehgestells 16 erfolgen über den außenliegenden Drehantrieb 22, der die Antriebswelle 24 und damit das mit der Antriebswelle 24 verbundene Drehgestell 16 um die Längsachse A des Druckbehälters 12 rotiert. Das Drehgestell 16 ist dabei über eine vordere Lagerung 21, bei der es sich insbesondere über die bereits erwähnten Auflageräder handeln kann, an einem Ende innerhalb des Druckbehälters 12 geführt und an einem anderen Ende über eine hintere Lagerung 25 zwischen der Antriebswelle 24 und dem Druckgehäuse 12.

Auch in Figur 3 sind die Förderketten 32 sowie der pneumatische Förderantrieb 34 im Einlassbereich des Autoklaven ersichtlich. Von dem Förderantrieb 34 erstrecken sich innerhalb des Druckraums 14 innenliegende Fluidleitungen 36 bis zum anderen Ende des Druckbehälters 12, wo diese in Längsbohrungen 37 der Antriebswelle 24 übergehen. Der Förderantrieb 34, die Förderkette 32 sowie die Fluidleitungen 36, 37 drehen sich während des Prozesses gemeinsam mit dem Drehgestell 16 und der Antriebswelle 24 um die Längsachse A. Ein Übergang von den rotierenden Fluidleitungen 36, 37 zu außerhalb des Druckbehälters befindlichen stationären Fluidleitungen 38 erfolgt über eine pneumatische Drehdurchführung 40. Über ein Fluidventil 42 ist die Verbindung zu einer nicht dargestellten pneumatischen Versorgungseinheit gewährleistet.

Die Durchführung zwischen Druckraum 14 und der Umgebung des Autoklaven ist in Figur 4 im Detail dargestellt. Hierbei ist insbesondere die Antriebswelle 24 erkennbar sowie eine Abdichtung 23 für die Antriebswelle 24, die den Druckraum 14 gegenüber der Umgebung abdichtet. Zudem sind die einen Teil der Fluidleitung bildenden Längsbohrungen 37 in der Antriebswelle 24 ersichtlich. Auch sind hier die Kanäle der pneumatischen Drehdurchführung 40 ersichtlich, welche den Übergang zwischen den um die Längsachse A rotierenden Leitungen 36, 37 zu den nachfolgenden stationären Leitungen 38 ermöglicht. Wie erläutert, rotiert die gesamte Antriebswelle 24 mitsamt den darin verlaufenden Fluidleitungen 37 sowie das Drehgestell 16 und die im Druckraum verlaufenden Fluidleitungen 36 um die Längsachse A.

Die erfindungsgemäße Fördereinrichtung erlaubt somit auch für einen Autoklaven mit Rotationsverfahren, also mit Drehvorrichtung, eine einfache und ergonomisch günstige Beschickung. Der pneumatische Förderantrieb ist beständig gegenüber den während des Prozesses innerhalb des Druckraums vorherrschenden Temperatur- und Druckbedingungen. Gleiches gilt für die Förderkette sowie die Fluidleitungen. In vorteilhafter Weise kann auch während des Prozesses die Versorgung des Förderantriebs, also insbesondere der innerhalb der Fördereinrichtung vorherrschende Luftdruck, aufrechterhalten werden, wobei alle Versorgungsleitungen mit dem gleichen Druck beaufschlagt werden. Dies verhindert ein Eindringen von Verunreinigungen, insbesondere von Wasser, während des Prozesses in den Förderantrieb. Dies könnte anderenfalls zu einer Beschädigung oder Beeinträchtigung desselben führen.

Zwischen einzelnen Behandlungsprozessen kann der Autoklav in einfacher Weise über die Fördereinrichtung beschickt werden. So können die Produktkäfige beispielsweise manuell an den Autoklaven herangefahren und bei geöffnetem Verschlussdeckel 13 auf die Rollenbahnen 28 aufgesetzt werden. Der insbesondere federnd gelagerte Kettenförderer 30 kann dabei die Förderkette 32 in kraftschlüssigen Kontakt mit den Produktkäfigen 26 bringen. Über den Förderantrieb 34 kann dann die Förderkette 32 bewegt werden, sodass die Produktkäfige tief in den Druckbehälter hineinverfahren werden können, wobei diese entlang der Rollenbahnen 28 gleiten.

### Bezugszeichenliste

- 10: Autoklav
- 12: Druckbehälter
- 13: Verschlussdeckel
- 14: Druckraum
- 15: Schnellverschluss
- 16: Drehgestell
- 17: Laufringe
- 18: Radkästen
- 19: Auflageräder
- 20: Klemmleisten
- 21: vordere Lagerung
- 22: Drehantrieb
- 23: Abdichtung
- 24: Antriebswelle
- 25: hintere Lagerung
- 26: Produktkäfige
- 28: Rollenbahnen
- 30: Kettenförderer
- 32: Förderkette
- 33: Antriebskette
- 34: pneumatischer Förderantrieb
- 36, 37: Fluidleitungen
- 38: stationäre Fluidleitungen
- 40: pneumatische Drehdurchführung
- 42: Fluidventil

## Patentansprüche

1. Autoklav (10) für die Druck- und/oder Temperaturbehandlung von Produkten, insbesondere zur Konservierung von Lebensmitteln, umfassend einen einen Druckraum (14) zur Aufnahme der Produkte begrenzenden Druckbehälter (12), **gekennzeichnet durch** eine Fördereinrichtung zur Beschickung des Autoklaven (10), mit
- innerhalb des Druckraums (14) angeordneten Fördermitteln (32) zum Transportieren der Produkte von einem Einlass des Autoklaven (10) tiefer in den Autoklaven (10) hinein,
- einem innerhalb des Druckraums (14) angeordneten Förderantrieb (34) zum Antreiben der Fördermittel (32), und
eine Drehvorrichtung zur Rotation der in den Druckraum (14) eingebrachten Produkte während der Behandlung, mit
- mindestens einem die Produkte aufnehmenden, innerhalb des Druckraums (14) angeordneten Drehgestell (16),
- einem außerhalb des Druckraums (14) angeordneten Drehantrieb (22) sowie
- einer zwischen dem Drehgestell (16) und dem Drehantrieb (22) durch eine druck- und/oder temperatursichere Öffnung des Druckbehälters (12) verlaufenden Antriebswelle (24),
- wobei die Fördermittel (32) und der Förderantrieb (34) gemeinsam mit dem Drehgestell (16) drehbar sind.

2. Autoklav (10) nach Anspruch 1, **dadurch gekennzeichnet, dass** der Autoklav (10) Versorgungsleitungen (36, 37) zur Versorgung des Förderantriebs (34) aufweist, die aus dem Druckraum (14) hinausführen.

3. Autoklav (10) nach Anspruch 2, **dadurch gekennzeichnet, dass** sich die Versorgungsleitungen (36, 37) zur Versorgung des Förderantriebs (34) durch die Antriebswelle (24) hindurch nach außerhalb des Druckbehälters (12) erstrecken.

4. Autoklav (10) nach einem der vorhergehenden Ansprüche, **dadurch gekennzeichnet, dass** der Förderantrieb (34) ein fluidtechnischer Förderantrieb (34) ist, der über Fluidleitungen (36, 37) als Versorgungsleitungen versorgt wird.

5. Autoklav (10) nach Anspruch 3 und 4, **dadurch gekennzeichnet, dass** sich die Fluidleitungen (36, 37) zur Versorgung des fluidtechnischen Förderantriebs (34) durch die Antriebswelle (24) hindurch nach außerhalb des Druckbehälters (12) erstrecken und dort über eine fluidtechnische Drehdurchführung (40) mit einer fluidtechnischen Versorgungseinheit verbunden sind.

6. Autoklav (10) nach einem der vorhergehenden Ansprüche, **dadurch gekennzeichnet, dass** innerhalb des Druckraums (14) Rollenbahnen (28) angeordnet sind entlang derer die Produkte, insbesondere die Produkte aufnehmende Produktkäfige (26), mittels der Fördermittel (32) gefördert werden können.

7. Autoklav (10) nach Anspruch einem der vorhergehenden Ansprüche, **dadurch gekennzeichnet, dass** als Fördermittel (32) eines oder mehrere der folgenden vorgesehen sind: Förderketten, Förderriemen, Förderseile.

8. Autoklav (10) nach einem der vorhergehenden Ansprüche, **dadurch gekennzeichnet, dass** die Fördermittel (32) federnd gelagert sind.

9. Autoklav (10) nach Anspruch 5, **dadurch gekennzeichnet, dass** die durch die Antriebswelle (24) verlaufenden Leitungsabschnitte der Fluidleitungen als Längsbohrungen in der Antriebswelle (24) ausgebildet sind.

10. Autoklav (10) nach Anspruch 5, **dadurch gekennzeichnet, dass** als Förderantrieb ein pneumatischer Förderantrieb vorgesehen ist, wobei die Fluidleitungen pneumatische Leitungen, die fluidtechnische Drehdurchführung eine pneumatische Drehdurchführung und die fluidtechnische Versorgungseinheit eine pneumatische Versorgungseinheit ist.

## Claims

1. An autoclave (10) for the pressure and/or temperature treatment of products, in particular for preserving food, comprising a pressure vessel (12) defining a pressure chamber (14) for receiving the products, **characterized by** a conveying apparatus for charging the autoclave (10), having
- conveying means (32) arranged inside the pressure chamber (14) for transporting the products from an inlet of the autoclave (10) deeper into the autoclave (10),
- a conveyor drive (34) arranged inside the pressure chamber (14) for driving the conveying means (32), and
a rotary device for rotating the products introduced into the pressure chamber (14) during the treatment, having
- at least one rotary frame (16) receiving the products and arranged inside the pressure chamber (14),
- a rotary drive (22) arranged outside the pressure chamber (14), as well as
- a drive shaft (24) running between the rotary frame (16) and the rotary drive (22) through a pressure and/or temperature-proof opening of the pressure vessel (12),
- wherein the conveying means (32) and the conveyor drive (34) are rotatable together with the rotary frame (16).

2. The autoclave (10) according to claim 1, **characterized in that** the autoclave (10) has supply lines (36, 37), which lead out of the pressure chamber (14), for supplying the conveyor drive (34).

3. The autoclave (10) according to claim 2, **characterized in that** the supply lines (36, 37) for supplying the conveyor drive (34) extend through the drive shaft (24) to the outside of the pressure vessel (12).

4. The autoclave (10) according to one of the preceding claims, **characterized in that** the conveyor drive (34) is a fluid-operated conveyor drive (34) which is supplied via fluid lines (36, 37) as supply lines.

5. The autoclave (10) according to claim 3 and 4, **characterized in that** the fluid lines (36, 37) for supplying the fluid-operated conveyor drive (34) extend through the drive shaft (24) to the outside of the pressure vessel (12) and are connected there to a fluid-operated supply unit via a fluid-operated rotary feedthrough (40).

6. The autoclave (10) according to one of the preceding claims, **characterized in that** roller tracks (28) are arranged inside the pressure chamber (14), the products, in particular the product cages (26) receiving the products, being able to be conveyed along said roller tracks by means of the conveying means (32).

7. The autoclave (10) according to one of the preceding claims, **characterized in that** one or more of the following are provided as conveying means (32): conveyor chains, conveyor belts, hauling cables.

8. The autoclave (10) according to one of the preceding claims, **characterized in that** the conveying means (32) are spring-mounted.

9. The autoclave (10) according to claim 5, **characterized in that** the line sections of the fluid lines running through the drive shaft (24) are configured as longitudinal bores in the drive shaft (24).

10. The autoclave (10) according to claim 5, **characterized in that** a pneumatic conveyor drive is provided as the conveyor drive, wherein the fluid lines are pneumatic lines, the fluid-operated rotary feedthrough is a pneumatic rotary feedthrough and the fluid-operated supply unit is a pneumatic supply unit.

## Revendications

1. Autoclave (10) pour le traitement par pression et/ou par température de produits, en particulier pour la conservation de produits alimentaires, comportant un récipient sous pression (12) délimitant une chambre de pression (14) pour la réception des produits, **caractérisé par** un dispositif de transport pour le chargement de l'autoclave (10) avec
- des moyens de transport (32) disposés à l'intérieur de la chambre de pression (14) pour le transport des produits à partir d'une entrée de l'autoclave (10) plus profondément vers l'intérieur de l'autoclave (10),
- un entraînement de transport (34) disposé à l'intérieur de la chambre de pression (14) pour l'entraînement des moyens de transport (32), et
un dispositif rotatif pour la rotation des produits insérés dans la chambre de pression (14) pendant le traitement, avec
- au moins une structure rotative (16) recevant les produits, disposée à l'intérieur de la chambre de pression (14),
- un entraînement rotatif (22) disposée à l'extérieur de la chambre de pression (14) ains que
- un arbre d'entraînement (24) passant entre la structure rotative (16) et l'entraînement rotatif (22) à travers une ouverture du récipient sous pression (12) résistante à la pression et/ou à la température,
- dans lequel les moyens de transport (32) et l'entraînement de transport (34) peuvent tourner conjointement avec la structure rotative (16).

2. Autoclave (10) selon la revendication 1, **caractérisé en ce que** l'autoclave (10) présente des conduites d'alimentation (36, 37) pour l'alimentation de l'entraînement de transport (34), lesquelles mènent vers l'extérieur de la chambre de pression (14).

3. Autoclave (10) selon la revendication 2, **caractérisé en ce que** les conduites d'alimentation (36, 37) s'étendent à travers l'arbre d'entraînement (24) vers l'extérieur du récipient sous pression (12) pour l'alimentation de l'entraînement de transport (34).

4. Autoclave (10) selon l'une des revendications précédentes, **caractérisé en ce que** l'entraînement de transport (34) est un entraînement de transport hydraulique (34), lequel est alimenté par le biais de conduites de fluide (36, 37) en tant que conduites d'alimentation.

5. Autoclave (10) selon les revendications 3 et 4, **caractérisé en ce que** les conduites de fluide (36, 37) s'étendent à travers l'arbre d'entraînement (24) vers l'extérieur du récipient sous pression (12) pour l'alimentation d'entraînement de transport hydraulique (34) et y sont reliées à une unité d'alimentation hydraulique par le biais de passages rotatifs hydrauliques (40).

6. Autoclave (10) selon l'une des revendications précédentes, **caractérisé en ce que** des convoyeurs à rouleaux (28) sont disposés à l'intérieur de la chambre de pression (14), le long desquels les produits, en particulier les cages de produits (26) recevant les produits, sont transportés à l'aide des moyens de transport (32).

7. Autoclave (10) selon l'une des revendications précédentes, **caractérisé en ce que** l'un ou plusieurs des éléments suivants sont prévus en tant que moyens de transport (32) : chaînes de transport, courroies de transport, câbles de transport.

8. Autoclave (10) selon l'une des revendications précédentes, **caractérisé en ce que** les moyens de transport (32) sont montés élastiquement.

9. Autoclave (10) selon la revendication 5, **caractérisé en ce que** les sections de conduite des conduites de fluide passant à travers l'arbre d'entraînement (24) sont conçues comme des alésages oblongs dans l'arbre d'entraînement (24).

10. Autoclave (10) selon la revendication 5, **caractérisé en ce qu'**un entraînement de transport pneumatique est prévu en tant qu'entraînement de transport, dans lequel les conduites de fluide sont des conduites pneumatiques, le passage rotatif hydraulique est un passage rotatif pneumatique et l'unité d'alimentation hydraulique est une unité d'alimentation pneumatique.
